**Europäisches Patentamt**

**European Patent Office**

**Office européen des brevets**

(19)

(11) Veröffentlichungsnummer : **0 323 440 B1**

(12)

# EUROPÄISCHE PATENTSCHRIFT

(45) Veröffentlichungstag der Patentschrift :
**11.03.92 Patentblatt 92/11**

(51) Int. Cl.$^5$ : **B23H 7/10, B23H 1/10**

(21) Anmeldenummer : **89102178.4**

(22) Anmeldetag : **10.05.85**

(54) **Vorrichtung zur Ermittlung des Spüldrucks einer funkenerosiven Drahtschneidmaschine.**

(30) Priorität : **25.05.84 DE 3419629**
**11.05.84 CH 2355/84**

(43) Veröffentlichungstag der Anmeldung :
**05.07.89 Patentblatt 89/27**

(60) Veröffentlichungsnummer der früheren
Anmeldung nach Art. 76 EPü : **0 165 438**

(45) Bekanntmachung des Hinweises auf die
Patenterteilung :
**11.03.92 Patentblatt 92/11**

(84) Benannte Vertragsstaaten :
**CH DE FR GB IT LI LU SE**

(56) Entgegenhaltungen :
**DE-A- 3 204 798**

(73) Patentinhaber : **AG für industrielle Elektronik**
**AGIE Losone bei Locarno**
**CH-6616 Losone/Locarno (CH)**

(72) Erfinder : **Del Bello, Athos**
**Via Isola**
**CH-6516 Cugnasco (CH)**
Erfinder : **Kilcher, Beat**
**Via Ronco 13**
**CH-6611 Arcegno (CH)**

(74) Vertreter : **EGLI-EUROPEAN PATENT**
**ATTORNEYS**
**Widenmayerstrasse 5**
**W-8000 München 22 (DE)**

## Beschreibung

Die Erfindung bezieht sich auf eine Vorrichtung zur Ermittlung eines dem momentanen Strömungszustand zugeordneten Druckes bei der Druck- und/oder Saugspülung des Arbeitsspaltes einer funkenerosiven Drahtschneidmaschine.

Die gattungsgemäße Vorrichtung ist aus der DD-Z "Elektrie" 36 (1982): Heft 7, S. 371-375 iVm Heft 5, S. 255-258 bekannt. In der genannten Literaturstelle wird dem Strömungszustand unter anderem die Durchflußmenge des Spülmediums im Arbeitsspalt zugeordnet. Zur Messung der Durchflußmenge wird ein Meßverfahren und eine entsprechende Druckmeßeinrichtung vorgeschlagen, welche den Druckabfall in Rohrleitungsabschnitten ausnutzt. Im übrigen ist den genannten Literaturstellen sowie der weiteren Literaturstelle DD-Z "Elektrie" 36 (1982): Heft 3, S. 126-129 die zentrale Bedeutung der Spülmenge im elektroerosiven Prozeß entnehmbar; ferner die Komplexität des Zusammenhanges der wechselseitigen Beeinflussung der wesentlichen, den elektroerosiven Prozeß beschreibenden Betriebsparameter. Zur Erzielung stabiler Arbeitsbedingungen wird gemäß den drei genannten Literaturstellen vorgeschlagen die Spülmenge während des Arbeitsprozesses mit Hilfe einer Regelschleife konstant zu halten. Eine konkrete Ausgestaltung einer gattungsgemäßen Vorrichtung ist den genannten Literaturstellen nicht entnehmbar, wohl aber der Hinweis, die Spülung als sogenannte Koaxialspülung auszugestalten.

Ausgehend vom vorgenannten Stand der Technik befaßt sich die Erfindung mit der Aufgabe, eine konkrete Vorrichtung der gattungsgemäßen Art anzugeben.

Diese Aufgabe wird dadurch gelöst, daß die gattungsgemäße Vorrichtung einen in den Spüleingang oder Spülausgang des Arbeitsspaltes mündenden Druckraum aufweist, welcher den Schneiddraht umgibt und mit einem Flüssigkeitsdruck-Fühler verbunden ist.

Die erfindungsgemäße Vorrichtung eignet sich auch zur Verwendung bei dem in der Stammanmeldung EP 0 165 438 beschriebenen Verfahren und der dort beschriebenen Drahtschneidanlage zur adaptiven Steuerung von Betriebsparametern beim funkenerosiven Schneiden eines Werkstücks mit Druck- und/oder Saugspülung des Arbeitsspaltes. Bei dem dort beschriebenen Verfahren und der dort beschriebenen Vorrichtung werden als Bezugsgröße der im Arbeitsspalt herrschende momentane Strömungszustand des Spülmediums erfaßt und in Abhängigkeit von der Bezugsgröße anderer Betriebsparameter gesteuert. Zusätzlich zur oder anstatt der Steuerung anderer Betriebsparameter als der momentane Strömungszustand kann dieser auch selbst geregelt werden, insbesondere auf einen konstanten Wert hin, worauf bereits in den vorgenannten Literaturstellen DD-Z "Elektrie" 36 (1982) hingewiesen wird.

Im übrigen sind adaptive Steuerverfahren und entsprechende Vorrichtungen beim elektroerosiven Schneiden aus der CH-PS 548 256 bekannt.

Schließlich ist aus der CH-PS 594 477 eine elektroerosive Drahtschneidmaschine mit einem Führungskopf für die Drahtelektrode bekannt, der zur koaxialen Spülung des Arbeitsspaltes ausgelegt ist. Dieser Führungskopf weist an seinem der Werkstückoberfläche zugewandten Ende einen die Drahtelektrode koaxial umgebenden und in den Spüleingang oder Spülausgang des Arbeitsspaltes mündenden, im übrigen abgeschlossenen Raum für die Spülflüssigkeit auf. Eine Anregung, diesen Raum gleichzeitig zur Druckmessung heranzuziehen, ist der genannten Schrift nicht entnehmbar.

Bevorzugte Ausführungsformen der Erfindung sowie die damit verbundenen Vorteile ergeben sich aus den dem Patentanspruch 1 folgenden Ansprüchen nebst zugehöriger Beschreibung.

Nachstehend wird die Erfindung anhand von Ausführungsbeispielen unter Bezugnahme auf die beigefügten schematischen Zeichnungen noch näher erläutert.

In den Zeichnungen zeigen:

Fig. 1 einen Längsschnitt durch ein erstes Ausführungsbeispiel;

Fig. 2a bis 2 d unterschiedliche Arbeitsbedingungen beim funkenerosiven Schneiden;

Fig. 3 einen Schnitt durch ein zweites Ausführungsbeispiel;

Fig. 4 einen Schnitt durch ein drittes Ausführungsbeispiel;

Fig. 5 eine grafische Aufzeichnung gemessener Druckunterschiede beim Spülen des Arbeitsspaltes.

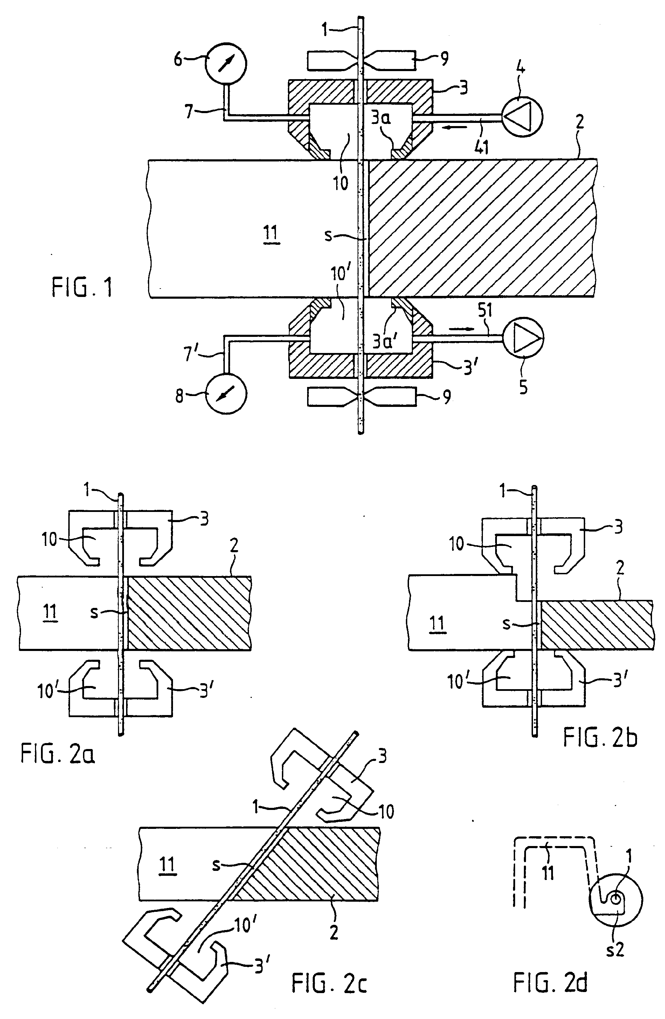

Fig. 1 veranschaulicht eine Schnittsituation beim Schneiden eines planparallelen Werkstücks 2 in einer funkenerosiven Schneidanlage. Aus Gründen einer übersichtlicheren Darstellung ist hierbeinur ein Ausschnitt aus einer funkenerosiven Schneidanlage dargestellt, und zwar lediglich schematisch. Der Schneiddraht 1 wird mittels einer bekannten Schneiddraht-Vorschubeinrichtung in der vorliegenden Fig. 1 von links nach rechts durch das Werkstück 2 geführt. Der bereits geschnittene Schnittspalt ist in den Figuren ohne Schraffierung dargestellt und mit dem Bezugszeichen 11 versehen. Der noch nicht geschnittene Bereich des Werkstücks 2 ist schraffiert dargestellt. Der Arbeitsspalt hat das Bezugszeichen s erhalten. Die Schneidelektrode 1 wird mit Hilfe von (ebenfalls bekannten) Drahtführungselementen 9 in geometrisch definierter Lage - und im allgemeinen unter einer Zugspannung - im Werkstück 2 gehalten - in diesem Ausführungsbeispiel in einer vertikal durch das Werkstück 2 führenden Richtung. Es können dazu Führungselemente verwendet werden, wie sie beispielsweise aus dem eingangs genannten Schweizer Patent 594 477 bekannt sind.

Zur Spülung des Arbeitsspaltes s ist ein Spülsystem vorgesehen, das ein an der planen Oberfläche des Werkstücks 2 dicht anliegendes Dichtsystem 3, eine mit diesem verbundene Zuflußleitung 41 und eine mit der Zuflußleitung 41 verbundene Druckpumpe 4 aufweist. Die Druckpumpe 4 fördert Spülmedium, beispielsweise entionisiertes Wasser, über die Zuflußleitung 41 in einen vom Dichtsystem 3 einerseits und einem Teil der planen Werkstückoberfläche andererseits umschlossenen oberen Druckraum 10. Eine erhöhte Abdichtwirkung wird durch einen unmittelbar auf der Werkstückoberfläche aufliegenden Gleitring 3a des Dichtsystems 3 erzielt. Der Gleitring 3a kann stirnseitig mit Ringrillen versehen sein, in denen Arbeitsmedium als gleitfördernde Schmierung gehalten werden kann. Außerdem ist er aus einem Werkstoff gefertigt, der außer Verschleißarmut gute Gleiteigenschaften auf metallischen Oberflächen zeigt.

Im gezeigten Ausführungsbeispiele ist der Druckraum 10 im wesentlichen düsen- bzw. mundstückförmig ausgebildet. Er wird entsprechend der zu schneidenden Bahnkurve mit dem Schneiddraht 1 mitgeführt und ist hierzu beispielsweise mit den Führungselementen 9 kraftschlüssig verbunden.

Als Druckraum kann z.B. auch der in der DE-PS 28 33 765 (AGIE) beschriebene abgedichtete Spülraum zwischen zwei im Abstand übereinander angeordneten Werkstücken dienen. Auf der dem oberen Dichtsystem 3 gegenüberliegenden Seite des Arbeitsspalts s ist ebenfalls ein Spülsystem angeordnet. Es weist ein unteres Dichtsystem 3′, eine Abflußleitung 51 und eine Saugpumpe 5 auf. Hierbei ist das untere Spülsystem im Prinzip in gleicher Weise wie das obere Spülsystem aufgebaut. Es weist demgemäß auch einen unteren Druckraum 10′ und einen unteren Gleitring 3a′ auf. Auch das untere Dichtsystem bewegt sich synchron mit dem aus dem Arbeitsspalt s austretenden Teil des Schneiddrahts 1. Es ist hierzu beispielsweise mit den unteren Drahtführungselementen 9 kraftschlüssig gekoppelt.

Die Druckpumpe 4 fördert das Spülmedium unter Druck in den Arbeitsspalt s hinein. Auf der gegenüberliegenden Seite wird das verschmutzte Medium unter Mitnahme abgetragener Werkstoffpartikel und Gasblasen durch die Saugpumpe 5 abgesaugt. Bevorzugt ist das aus der oberen und der unteren Spüleinrichtung bestehende Gesamtspülsystem so ausgelegt und eingestellt, daß der Schneiddraht 1 koaxial von einem Spülstrahl umspült wird.

Beim Ausführungsbeispiel gemäß Fig. 1 ist der obere Druckraum 10 über ein Meßrohr 7 mit einem Überdruckmanometer 6 und der untere Druckraum 10′ über ein Meßrohr 7′ mit einem Unterdruckmanometer 8 verbunden. Das Überdruckmanometer 6 zeigt also den Druck im oberen Druckraum 10, das Unterdruckmanometer 8 den Druck im unteren Druckraum 10′ an. Durch Auswertung der beiden Druckmeßwerte gelangt man zum Druckgefälle, d.h. der Differenz zwischen dem Druckwert im oberen Druckraum 10 und dem Druckwert im unteren Druckraum 10′. Diese Differenz kann beispielsweise durch eine entsprechende Differenzschaltung automatisch ermittelt werden.

Wünscht man nun eine Steuerung bzw. eine Regelung des Druckgefälles auf einen konstanten Wert hin, wird das momentane Druckgefälle, d.h. der Istwert des Druckgefälles mit einem vorgegebenen Vergleichs- bzw. Sollwert- oder bei variablen Vergleichs- bzw. Sollwerten einem sog. Leitwert verglichen, aus dem Vergleichsergebnis ein Regelsignal abgeleitet und letzteres einem Stellglied zur Änderung der Pumparbeit der Druckpumpe 4 und/oder der Saugpumpe 5 zugeführt.

Wie bereits einleitend durch die Bezugnahme auf die Stammanmeldung EP 0 165 438 erwähnt, kann aus der Abweichung zwischen Vergleichs- und Istwert auch ein Signal zur Steuerung des Generatorbetriebes und-/oder der Drahtspannung und/oder des Drahtvorschubes, einschließlich einer Drahtrückführung, abgeleitet werden.

Bei dem in Fig. 1 dargestellten Ausführungsbeispiel kann in der Regel davon ausgegangen werden, daß Schwankungen des Druckgefälles nur innerhalb eines kleinen Bereiches auftreten, da hier von einem Werkstück mit planparallelen Oberflächen ausgegangen wurde. Geringfügige Schwankungen könnten beispielsweise durch Schwankungen bei der Versorgung der Druckpumpe 4 mit Spülmedium, Störungen in der Druckpumpe 4 und/oder der Saugpumpe 5, oder beispielsweise kurzzeitig mangelhaftem Dichtschluß zwischen Gleitring 3a oder 3a′und der Werkstückoberfläche bedingt sein.

Fig. 2 zeigt einige Möglichkeiten, bei denen die Spülbedingungen beim Schneiden nicht so optimal sind, insbesondere bei denen ein schlechter Dichtschluß zwischen dem Dichtsystem 3 bzw. 3′, d.h. dem Mundstück, und der Werkstückoberfläche gegeben sind.

In Fig. 2 sowie in den folgenden Figuren werden die in Figur 1 verwendeten Bezugzeichen verwendet, soweit es sich um technisch-funktionell gleiche Elemente handelt.

Fig. 2a zeigt eine Schnittsituation, bei der ein Abstand zwischen dem oberen und unteren Dichtsystem 3 bzw. 3′zur Werkstückoberfläche erforderlich ist, beispielsweise aus kollisions- oder aufspanntechnischen Gründen.

In Fig. 2b ist ein schlechter Dichtschluß zwischen dem oberen Spülsystem und der oberen Werkstückoberfläche gegeben, da das Werkstück 2 auf seiner oberen Oberfläche eine Stufe aufweist. Entsprechendes gilt auch für den Fall, daß das Werkstück 2 auf seiner unteren Oberfläche abgesetzt ist.

In Fig. 2c ist ein schlechter Dichtschluß dadurch gegeben, daß ein konischer Schnitt ausgeführt werden muß.

Fig. 2d zeigt eine Schneidsituation, bei welcher der Schneiddraht 1 um enge, aufeinanderfolgende Ecken geführt werden muß. Es entsteht hierbei eine vergleichsweise große Spülfläche s2, die demgemäß auch einen größeren Spülmediumdurchsatz erfordert.

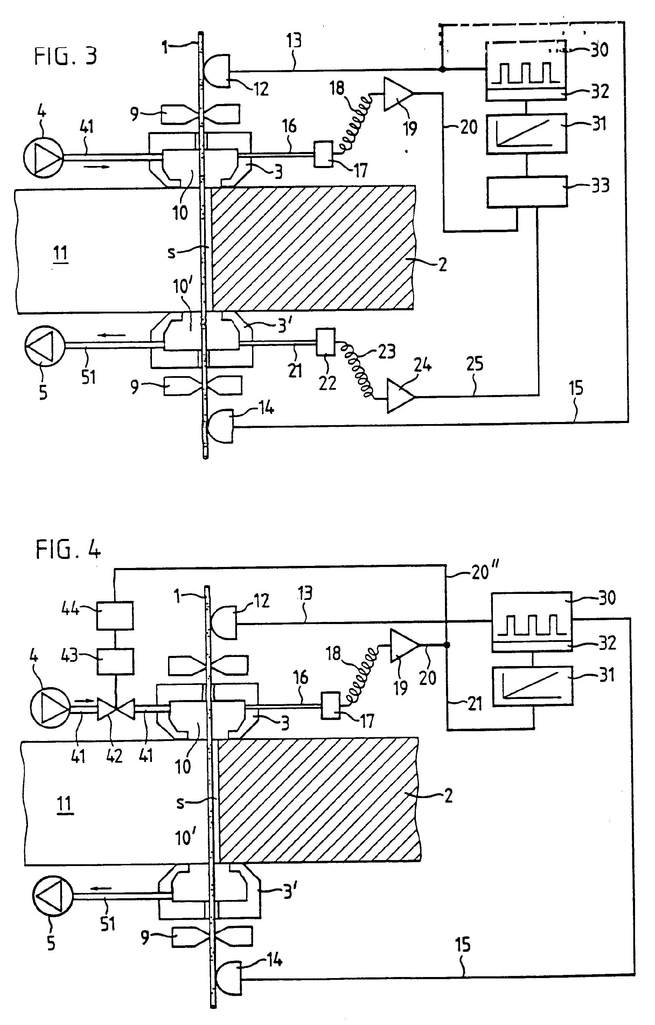

Die Darstellung in Fig. 3 weicht zunächst insoweit von der Darstellung in Fig. 1 ab, als noch ein Impulsgenerator 30, die Stromzuführungen 12 und 14 zum Schneiddraht 1 sowie die elektrischen Verbindungsleitungen 13 und 15 zwischen dem Impulsgenerator 30 und den Stromzuführungen 12 und 14 zeichnerisch dargestellt sind.

Die in Fig. 1 dargestellten Überdruck- bzw. Unterdruckmanometer 6 und 8 sowie die Meßrohre 7 und 7′sind in diesem Ausführungsbeispiel durch beliebige Druckfühler 17 und 22 und Meßleitungen 16 und 21 realisiert. Die Meßleitungen 16 und 21 können hierbei dünne Rohre oder Druckschläuche sein. Die Druckfühler 17 und 22 sind jeweils mit elektrofluidischen Wandlern bestückt, deren Ausgangssignale über Spiralkabel 18 und 23 jeweils einem Signalverstärker 19 bzw. 24 zugeführt werden. Mit den Spiralkabeln 18 und 23 werden unterschiedliche Abstände zwischen den Druckfühlern 17 bzw. 22 und den ihnen zugeordneten Verstärkern 19 bzw. 24 überbrückt.

Die Ausgangssignale der Signalverstärker 19 und 24 werden über die elektrischen Leitungen 20 und 25 einem gemeinsamen Differenzglied 33 zugeführt. Das Ausgangssignal des Differenzglieds 33 ist gleich der Differenz der von den Signalverstärkern 19 und 24 ausgehenden Drucksignale. Das Ausgangssignal des Differenzgliedes 33 wird einem Steuerglied 31 zugeführt. Das Steuerglied 31 vergleicht zunächst in einer Vergleichsstufe die gemessene Druckdifferenz, d.h. den Istwert der Druckdifferenz, mit einem vorgegebenen Vergleichswert für die Druckdifferenz. Aus dem Ergebnis dieses Vergleichs wird ein Signale gebildet, aus dem dann im Steuerglied 31 ein Steuersignal zur Ansteuerung einer nachgeschalteten Generator-Stelleinrichtung 32 abgeleitet wird. Die Generator-Stelleinrichtung 32 ist derart ausgelegt, daß mit ihr die Impulsfrequenz des Generators, d.h. die Impuls- und/oder die Pausendauer geändert werden kann. Hierbei ist das Steuerglied 31 in Verbindung mit der Generator-Stelleinrichtung 32 derart ausgelegt daß bei einem unter dem Vergleichswert liegenden momentanen Druckgefälle längs des Arbeitsspaltes s die Generatorleistung über die Impulsfrequenz reduziert wird, dem Schneiddraht 1 also weniger elektrische Energie pro Zeit zugeführt wird. Statt der Impulsfrequenz kann auch die Impulshöhe reduziert werden.

Bei dem in Fig. 3 dargestellten Ausführungsbeispiel können grundsätzlich auch die Druck- und die Saugseite vertauscht, d.h. dem in Fig. 3 unteren Druckraum 10′das Spülmedium unter Druck zugeführt und aus dem oberen Druckraum 10 wieder abgesaugt werden.

Statt dessen kann das Spülmedium auch beidseitig, d.h. durch das obere und durch das untere Spülsystem mit Druck dem Arbeitsspalt s zugeführt werden. In diesem Fall werden die von den Signalverstärkern 19 und 24 ausgehenden Signale nicht einem gemeinsamen Differenzglied zugeführt. Vielmehr ist jedem Verstärker 19 und 24 ein eigenes - nicht dargestelltes - Steuerglied nachgeschaltet. Das Steuerglied nimmt in an sich bekannter Weise einen Vergleich zwischen dem Ist- und dem Vergleichswert vor und leitet aus der Differenz zwischen Ist- und Vergleichswert in bekannter Weise ein Steuersignal ab. Um sicherzustellen daß bereits dann die Generatorleistung reduziert wird, wenn nur einer der beiden Druckfühler 17 oder 22 ein unterhalb des Solwertes liegendes Drucksignal anzeigt, sind die Ausgänge der beiden - nicht dargestellten - Steuerglieder über ein gemeinsames ODER-Glied mit der Generator-Stelleinrichtung 32 verbunden.

Grundsätzlich wird eine verbesserte Steuerung der Spülbedingungen bereits dann erreicht, wenn nur ein Druckraum 10 oder 10′mit einem Druckfühler 17 oder 22 verbunden ist. Hierbei kann das Spülmedium entweder unter Druck in den Druckraum 10 eingeführt oder aus diesem abgesaugt werden. Diese Maßnahme hat den Vorteil eines geringeren meßtechnischen Aufwandes. Sie wird sich in aller Regel aber nur in den Fällen lohnen, in denen der Arbeitsspalt s relativ kurz, bzw. sehr dünn ist.

Ein weiteres Ausführungsbeispiel zur Beeinflussung der Generatorleistung und daneben auch der Spülmediumzufuhr ist anhand der Fig. 4 schematisch veranschaulicht.

Die in den Fig. 3 und 4 schematisch dargestellten Ausführungsbeispiele weichen im wesentlichen dadurch voneinander ab, daß der Druck nur im oberen Druckraum 10 gemessen und das Meßsignal zusätzlich einem weiteren Steuerglied 44 zur Steuerung einer Stelleinrichtung für ein Regulierventil 42 zugeführt wird. Das Regulierventil 42 ist in der Zuflußleitung 41 angeordnet. Mit ihm kann in bekannter Weise der wirksame Strömungsquerschnitt des Spülmediums in der Zuflußleitung 41 geändert werden. Die Einstellung des Regulierventils 42 erfolgt über einen Servomotor 43, der hier als Stelleinrichtung dient. Der Servomotor 43 wird von dem Steuerglied 44 angesteuert. Das Steuerglied 44 vergleicht in bekannter Weise den ihm vom Verstärker 19 zugeführten Druck-Ist-Wert mit einem vorgegebenen Druck-Vergleichs-Wert und verarbeitet das Vergleichsergebnis zu einem Steuersignal für den Servomotor 43. Da beim dargestellten Ausführungsbeispiele nicht das Druckgefälle, sondern nur ein Druckwert gemessen wird, kann auf das in Fig. 3 dargestellte Differenzglied 33 verzichtet werden.

Bei dem in Fig. 4 dargestellten Ausführungsbeispiel kann - entsprechend dem in Fig. 3 dargestellten Ausführungsbeispiel - auch der untere Druckraum 10' mit einem Druckfühler und nachgeschaltetem Signalverstärker bestückt sein. Handelt es sich hierbei wieder um ein Druck-/Saug-Spülsystem, dann werden die Ausgänge der Signalverstärker wiederum einem Differenzglied zugeführt (wie in Fig. 3) und von dort an die entsprechenden Steuerglieder weitergeleitet, beispielsweise an das dem Impulsgenerator 30 vorgeschaltete Steuerglied 31 und das dem Regulierventil 42 vorgeschaltete Steuerglied 44. Als weitere Alternative kann die in Fig. 4 dargestellte Saugpumpe 5 auch durch eine Druckpumpe ersetzt werden.

Die Generator-Stelleinrichtung 32 greift zur Änderung des Generatorbetriebs, insbesondere also zur Änderung der Generatorleistung auf bekannte Weise durch Änderung der Impulsbreite oder -form etc. in den Generatorbetrieb ein.

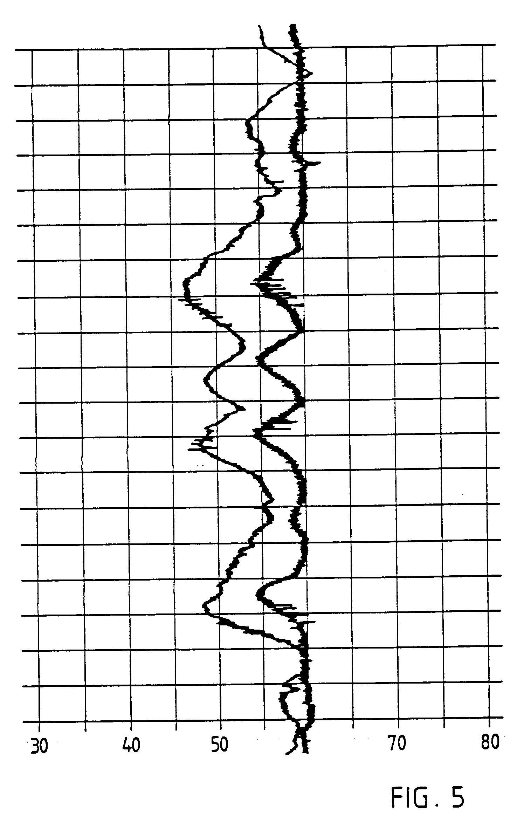

Fig. 5 ist eine Wiedergabe einer Aufzeichnung von Druckkurven mittels eines XY-Schreibers. Hierbei wurde im wesentlichen das Ausführungsbeispiel nach Fig. 1 zugrundegelegt.

Die Erfindung eignet sich zur Verwendung in einem Verfahren oder einer Vorrichtung zur Lösung des in der Fachwelt bereits seit langem intensiv behandelten Problemes der Reduzierung einer Drahtrißgefahr beim elektroerosiven Schneiden; ebenfalls für einen Einsatz bei einem Verfahren oder einer Vorrichtung zur Erzielung möglichst optimaler Spülbedingungen - und damit auch elektrischer Bedingungen im Arbeitsspalt.

## Patentansprüche

1. Vorrichtung zur Ermittlung eines dem momentanen Strömungszustand zugeordneten Druckes bei der Druck- und/oder Saugspülung des Arbeitsspaltes (s) einer funkenerosiven Drahtschneidmaschine, **gekennzeichnet durch**
einen in den Spüleingang oder Spülausgang des Arbeitsspaltes (s) mündenden, den Schneiddraht (1) umgebenden, und mit einem ersten Flüssigkeitsdruck-Fühler (6; 17) verbundenen ersten Druckraum (10).

2. Vorrichtung nach Anspruch 1, dadurch gekennzeichnet, daß der erste Druckraum (10) zur Erzeugung eines koaxialen Spülstrahls den Schneiddraht (1) koaxial umgebend angeordnet ist.

3. Vorrichtung nach einem der Ansprüche 1 oder 2, gekennzeichnet durch einen dem ersten Druckraum (10) entsprechenden, auf der anderen Seite des Arbeitsspaltes (s) angeordneten zweiten Druckraum (10'), der mit einem zweiten Flüssigkeitsdruck-Fühler (8; 22) verbunden ist.

4. Vorrichtung nach Anspruch 3, dadurch gekennzeichnet, daß die beiden Flüssigkeitsdruck-Fühler (6, 8; 17, 22) durch einen Druckdifferenzfühler realisiert sind.

5. Vorrichtung nach einem der vorstehenden Ansprüche, dadurch gekennzeichnet, daß der Druckraum (10; 10') kraftschlüssig mit den Führungselementen (9) des Schneiddrahtes (1) verbunden ist.

6. Vorichtung nach einem der vorstehenden Ansprüche, dadurch gekennzeichnet, daß der Druckraum (10; 10') düsen- bzw. mundstückartig ausgebildet ist.

7. Vorrichtung nach einem der vorstehenden Ansprüche, dadurch gekennzeichnet, daß der Druckraum (10; 10') einen unmittelbar auf der Werkstückoberfläche aufliegenden Gleitring (3a; 3a') aufweist.

8. Vorrichtung nach Anspruch 7, dadurch gekennzeichnet, daß der Gleitring (3a; 3a') stirnseitig mit Ringrillen versehen ist.

## Claims

1. An arrangement for determining a pressure, associated with the instantaneous condition of flow, during the pressure flushing and/or suction flushing of the working gap (s) of a wire-cut electroerosion machine, characterized by
a first pressure space (10) opening into the flushing input or flushing output of the working gap (s), surrounding the cutting wire (1) and connected to a first liquid-pressure sensor (6; 17).

2. An arrangement according to claim 1, characterized in that the first pressure space (10) for the generation of a coaxial flushing jet is arranged so that it surrounds the cutting wire (1) coaxially.

3. An arrangement according to one of claims 1 or 2, characterized by a second pressure space (10') corresponding with the first pressure space (10) and arranged on the other side of the working gap (s), the second pressure space being connected to a second liquid-pressure sensor (8; 22).

4. An arrangement according to claim 3, characterized in that the two liquid-pressure sensors (6, 8; 17, 22) are realized by a pressure-difference sensor.

5. An arrangement according to one of the above claims, characterized in that the pressure space (10; 10′) is frictionally connected to the guide elements (9) of the cutting wire (1).

6. An arrangement according to one of the above claims, characterized in that the pressure space (10; 10′) is constructed like a nozzle or like a mouthpiece.

7. An arrangement according to one of the above claims, characterized in that the pressure space (10; 10′) has a slide ring (3a; 3a′) resting directly on the workpiece surface.

8. An arrangement according to claim 7, characterized in that the slide ring (3a; 3a′) is provided on the front side with annular grooves.

**Revendications**

1. Dispositif de détermination d'une pression correspondant à un état momentané de la circulation du fluide de lavage, par refoulement et/ou aspiration, de la fente de travail (s) d'une machine à fil de coupe par électro-érosion,
caractérisé par
une première chambre sous pression (10) débouchant sur l'entrée ou la sortie de lavage de la fente de travail (s), entourant le fil de coupe (1) et reliée à un premier capteur (6 ; 17) de la pression du liquide.

2. Dispositif selon la revendication 1, caractérisé en ce que la première chambre sous pression (10) est disposée de manière à entourer coaxialement le fil de coupe (1) afin de produire un flux coaxial de lavage.

3. Dispositif selon l'une des revendications 1 ou 2, caractérisé par une seconde chambre sous pression (10′) associée à la première chambre sous pression (10), disposée de l'autre côté de la fente de travail (s) et reliée à un second capteur (8 ; 22) de la pression du liquide.

4. Dispositif selon la revendication 3, caractérisé en ce que les deux capteurs (6, 8 ; 17, 22) de la pression du liquide sont constitués d'un capteur de différence de pression.

5. Dispositif selon l'une quelconque des revendications précédentes, caractérisé en ce que la chambre sous pression (10 ; 10′) est reliée par conjugaison de forces aux éléments (9) de guidage du fil de coupe (1).

6. Dispositif selon l'une des revendications précédentes, caractérisé en ce que la chambre sous pression (10 ; 10′) est conformée en tuyère ou embout.

7. Dispositif selon l'une des revendications précédentes, caractérisé en ce que la chambre sous pression (10 ; 10′) comporte un anneau glissant (3a ; 3a′) reposant directement sur la surface de la pièce.

8. Dispositif selon la revendication 7, caractérisé en ce que l'anneau glissant (3a ; 3a′) comporte du côté frontal des rainures annulaires.

FIG. 1

FIG. 2a

FIG. 2b

FIG. 2c

FIG. 2d

7

**EP 0 323 440 B1**

FIG. 3

FIG. 4

8

FIG. 5